# EUROPÄISCHE PATENTANMELDUNG

(11) **EP 3 926 017 A1**
(43) Veröffentlichungstag der Anmeldung: **22.12.2021**
(21) Anmeldenummer: 20181165.0
(22) Anmeldetag: 19.06.2020
(51) Int. Cl.: C09D 183/04

(54) **BESCHICHTUNGSMASSE, KIT-OF-PARTS FÜR EINE BESCHICHTUNGSMASSE, BESCHICHTUNG ERHÄLTLICH MIT DER BESCHICHTUNGSMASSE ODER DEM KIT-OF-PARTS, BESCHICHTETES SUBSTRAT UND VERWENDUNG DER BESCHICHTUNGSMASSE**

(71) Anmelder: DAW SE, 64372 Ober-Ramstadt (DE)
(72) Erfinder: RÖBER, Friedhelm, 04668 Grimma (DE); WIESE-EDELMANN, Barbara, 04668 Grimma (DE); RATHMANN, Daniel, 01917 Kamenz (DE); MÜLLER, Constanze, 04451 Borsdorf (DE)
(74) Vertreter: Metten, Karl-Heinz

(57) **Zusammenfassung**

Die vorliegende Erfindung betrifft eine Beschichtungsmasse, gebildet aus einer ersten Zusammensetzung A), enthaltend ein Polydialkylsiloxan, Füllstoffe oder Pigmente und einen Vernetzer, und eine zweite Zusammensetzung B), enthaltend einen Katalysator, oder aus einer dritten Zusammensetzung C), umfassend ein Polydialkylsiloxan, Füllstoffe oder Pigmente und einen Vernetzer, und einen Katalysator. Ferner betrifft die Erfindung einen Kit-of-parts für eine Beschichtungsmasse, enthaltend als erste Komponente die vorangehend genannte Zusammensetzung A) in einem ersten Gebinde und als zweite Komponente die vorangehend genannte Zusammensetzung B) in einem zweiten Gebinde. Außerdem betrifft die Erfindung eine Beschichtung, erhalten mit der erfindungsgemäßen Beschichtungsmasse oder mit dem erfindungsgemäßen Kit-of-parts. Zudem betrifft die Erfindung ein beschichtetes Substrat, erhalten durch Behandeln eines Substrats mit der erfindungsgemäßen Beschichtungsmasse oder mit dem erfindungsgemäßen Kit-of-parts. Schließlich stellt die Erfindung ab auf die Verwendung der erfindungsgemäßen Beschichtungsmasse oder des erfindungsgemäßen Kit-of-parts für die Beschichtung eines Substrats sowie für die Herstellung einer diffusionsoffenen Beschichtung auf einem Substrat.

## Beschreibung

Die vorliegende Erfindung betrifft eine Beschichtungsmasse, einen Kit-of-parts für eine Beschichtungsmasse, eine Beschichtung erhältlich mit der erfindungsgemäßen Beschichtungsmasse oder dem erfindungsgemäßen Kit-of-parts, ein beschichtetes Substrat und die Verwendung der erfindungsgemäßen Beschichtungsmasse.

Beschichtungen für jedwede Untergründe sind in vielfältiger Form erhältlich und seit langem bekannt. Insbesondere Beschichtungen für Substratoberflächen, die im Außenbereich zum Einsatz kommen, haben hohen Anforderungen zu genügen. Sie sollen regelmäßig UVbeständig sein, unter den üblichen Witterungsbedingungen nicht oder nicht zu schnell spröde werden und auch bei thermischer Ausdehnung oder Schrumpfung des Substratuntergrundes keine Spannungsrisse oder Abplatzungen zeigen. Gleichwohl bilden noch stets viele Lackbeschichtungen starre Filme aus, die den gewünschten Vorgaben nicht immer gerecht werden. Aufgrund seines Dehnungsverhaltens bei unterschiedlichen Feuchtegehalten sowie bei unterschiedlichen Temperaturen stellen Holzsubstrate häufig besonders hohe Anforderungen an das Beschichtungsmaterial. Die gewünschte Schutzfunktion von Beschichtungen geht dann relativ schnell verloren. Haben sich einmal Risse in der Beschichtung gebildet, kommt es häufig zu einer beschleunigten Beeinträchtigung der Beschichtung infolge von Feuchteeintritt. Die geschilderten Nachteile stellen sich vielfach sowohl bei wässrigen wie auch bei nicht wässrigen Beschichtungssystemen des Stands der Technik ein.

Der vorliegenden Erfindung lag die Aufgabe zugrunde, solche Beschichtungsmassen zu finden, die nicht mehr mit den Nachteilen des Stands der Technik behaftet sind und die sich insbesondere für eine dauerhafte, witterungsbeständige Beschichtung eignen, welche über einen relativ großen Temperaturbereich ihr Eigenschaftsprofil beibehält. Außerdem lag der Erfindung die Aufgabe zugrunde, solche Beschichtungsmassen zur Verfügung zu stellen, die hinsichtlich Umwelt- und Arbeitssicherheit unbedenklich sind und/oder sich über einen großen Temperaturbereich problemlos auftragen lassen.

Demgemäß wurde eine erste Ausführungsvariante einer erfindungsgemäßen Beschichtungsmasse gefunden, gebildet aus oder umfassend
eine erste Zusammensetzung A), enthaltend
a1) mindestens ein, insbesondere raumtemperaturvernetzendes (RTV-), Polydialkylsiloxan, vorzugsweise Polydimethylsiloxan,
a2) Füllstoffe, bevorzugt plättchenförmige Füllstoffe und/oder Mikrokugeln, besonders bevorzugt Mikrokugeln, und/oder Pigmente und
a3) mindestens einen Vernetzer, sowie
a4) gegebenenfalls ein Verdünnungsmittel, und
eine zweite Zusammensetzung B), enthaltend
b1) mindestens einen Katalysator, insbesondere ein Organozinn-basierter Katalysator oder ein Platin-basierter Katalysator oder ein Bismuth-basierter Katalysator oder ein Zirkon-basierter Katalysator oder ein Titan-basierter Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b2) gegebenenfalls ein Verdünnungsmittel.

Ferner wurde eine zweite Ausführungsvariante einer erfindungsgemäßen Beschichtungsmasse gefunden, gebildet aus oder umfassend
eine dritte Zusammensetzung C), enthaltend
a1) mindestens ein, insbesondere raumtemperaturvernetzendes (RTV-), Polydialkylsiloxan, vorzugsweise Polydimethylsiloxan,
a2) Füllstoffe, insbesondere plättchenförmige Füllstoffe und/oder Mikrokugeln, besonders bevorzugt Mikrokugeln, und/oder Pigmente und
a3) mindestens einen Vernetzer, und
b1) mindestens einen Katalysator, insbesondere ein Organozinn-basierter Katalysator oder ein Platin-basierter Katalysator oder ein Bismuth-basierter Katalysator oder ein Zirkon-basierter Katalysator oder ein Titan-basierter Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b2) gegebenenfalls ein Verdünnungsmittel.

Die erfindungsgemäße Beschichtungsmasse kann demgemäß ein einkomponentiges (zweite Ausführungsvariante) wie auch ein zweikomponentiges (erste Ausführungsvariante) Beschichtungssystem darstellen. Demgemäß kann anstelle des Begriffs Beschichtungsmasse auch der Begriff Beschichtungssystem für den erfindungsgemäßen Gegenstand verwendet werden.

Aus den erfindungsgemäßen Beschichtungsmassen kann eine erfindungsgemäße Beschichtung bereits dadurch besonders effizient erhalten werden, dass man sie der Luftfeuchtigkeit aussetzt.

Als Verdünnungsmittel kommen alle dem Fachmann geläufigen gängigen Verdünnungsmittel in Betracht. Diese sind bevorzugt wasserfrei.

Die erste Zusammensetzung A) oder die dritte Zusammensetzung C) der erfindungsgemäßen Beschichtungsmassen umfassen in besonders bevorzugten Ausführungsformen ferner
a5) Kieselsäuren, insbesondere pyrogene Kieselsäure, und/oder
a6) Kieselsäureester, bevorzugt Tetraalkoxysilane, besonders bevorzugt Tetraethoxysilan, und/oder
a7) mindestens einen Haftvermittler.

Zu den geeigneten Kieselsäuren gehören neben pyrogener Kieselsäure ebenfalls gefällte Kieselsäure, mit Wachs nachbehandelte gefällte Kieselsäure, mit Wachs nachbehandelte pyrogene Kieselsäure und deren beliebige Mischungen. Durch die Zugabe von Kieselsäure, insbesondere pyrogener Kieselsäure, werden Beschichtungen mit einer besonders edel bzw. weich anmutenden Haptik erhalten. Auch hat sich überraschend gezeigt, dass die Komponente a5) für die erfindungsgemäßen Beschichtungsmasse mitunter die Funktion eines Rheologiehilfsmittels einnehmen kann.

Unter den Kieselsäure der Komponente a5) sind synthetische hydrophobe Kieselsäuren besonders bevorzugt. Unter diesen wird insbesondere auf amorphe und/oder flammenhydrolytisch hergestellte Kieselsäure zurückgegriffen. Ganz besonders bevorzugt sind unter diesen synthetischen hydrophoben Kieselsäuren mit Trialkylsiloxy-Gruppen, insbesondere Trimethylsiloxy-Gruppen, oberflächenmodifizierte Kieselsäuren. Geeignete Kieselsäuren, insbesondere geeignete synthetische hydrophobe Kieselsäuren, wie vorangehend spezifiziert, verfügen bevorzugt über eine BET-Oberfläche im Bereich von 50 bis 400 m²/g, bevorzugt im Bereich von 100 bis 300 m²/g und besonders bevorzugt im Bereich von 150 bis 250 m²/g, jeweils bestimmt gemäß DIN ISO 9277:2014-01.

Durch Verwendung der Komponente a6) gelingt es besonders gut, Beschichtungen mit einem mattem Erscheinungsbild aus den erfindungsgemäßen Beschichtungsmassen zu erhalten. Auch kann die Komponente a6) dazu beitragen, die Viskosität der ersten Zusammensetzung A) oder der dritten Zusammensetzung C) zu erniedrigen, insbesondere bei Verwendung höherviskoser Polydialkylsiloxane a1) und/oder bei Mitverwendung der Komponente a5), insbesondere von sehr feinteiligen Kieselsäuren, beispielsweise mit einer durchschnittlichen Partikelgröße im Nanometerbereich.

Darüber hinaus kann die erste Zusammensetzung A) oder die dritte Zusammensetzung C) alternativ oder zusätzlich zu den Komponenten a5) und/oder a6) auch mindestens einen Haftvermittler (Komponente a7)) enthalten. Diese sind bevorzugt ausgewählt aus der Gruppe bestehend aus Silanen mit amino-, acryl-, epoxy-, cyanurato-, carbamato- oder ureidofunktionellen Gruppen; Organopolysiloxanen mit amino-, acryl-, epoxy-, cyanurato-, carbamato- oder ureidofunktionellen Gruppen; und deren beliebigen Mischungen sowie insbesondere aus der Gruppe bestehend aus Silanen mit acryl-, epoxy-, cyanurato-, carbamato- oder ureidofunktionellen Gruppen; Organopolysiloxanen mit acryl-, epoxy-, cyanurato-, carbamato- oder ureidofunktionellen Gruppen; und deren beliebigen Mischungen. Erfindungsgemäße Beschichtungsmassen mit der Komponente a7) werden insbesondere für die Beschichtung von PVC-Formteilen eingesetzt. Beispielsweise können Fensterrahmen oder dergleichen aus PVC mit diesen erfindungsgemäßen Beschichtungsmassen beschichtet werden.

Gemäß einer weiteren Ausführungsform der erfindungsgemäßen Beschichtungsmassen kann vorgesehen sein, dass die zweite Zusammensetzung B) oder die dritte Zusammensetzung C) ferner mindestens einen Offenzeitverlängerer (Komponente b3)) enthalten. Als besonders geeigneter Offenzeitverlängerer für die erfindungsgemäßen Beschichtungsmassen hat sich Isobutylmethylketon erwiesen.

In der Zusammensetzung A) oder der dritten Zusammensetzung C) der erfindungsgemäßen Beschichtungsmassen wird für das Polydialkylsiloxan bevorzugt auf Polydimethylsiloxan zurückgegriffen. Hierbei kommen insbesondere Polydialkylsiloxane mit Dialkoxyendgruppen zum Einsatz. Unter diesen sind Polydialkylsiloxane, insbesondere Polydimethylsiloxan, mit Dimethoxyendgruppen besonders bevorzugt. Bei den Polydialkylsiloxanen, insbesondere den raumtemperaturvernetzenden (RTV-) Polydialkylsiloxanen, vorzugsweise Polydimethylsiloxanen, handelt es sich bevorzugt um kondensations- oder additionsvernetzende, insbesondere um kondensationsvernetzende Polydialkylsiloxane, bevorzugt Polydimethylsiloxan.

Für die erste Zusammensetzung A) oder die dritte Zusammensetzung C) der erfindungsgemäßen Beschichtungsmassen kann insbesondere auf Polydialkylsiloxane mit einer Viskosität im Bereich von 0,25 bis 15 Pa.s, bevorzugt im Bereich von 0,5 bis 12 Pa.s und besonders bevorzugt im Bereich von 0,75 bis 10 Pa.s, jeweils ermittelt gemäß DIN 53019-1:2008-09 (bei 25°C), zurückgegriffen werden. Als besonders zweckmäßig haben sich für viele Anwendungen derartige Polydialkylsiloxane gemäß Komponente a1) erwiesen, die eine Viskosität im Bereich von 5 bis 10 Pa.s, ermittelt wie vorangehend beschriebenen, aufweisen.

Für viele Anwendungen hat es sich alternativ oder zusätzlich als besonders vorteilhaft erwiesen, auf im Wesentlichen wasserfreie Zusammensetzungen A) oder auf im Wesentlichen wasserfreie dritte Zusammensetzungen C) und insbesondere auf im Wesentlichen wasserfreie Beschichtungsmassen zurückzugreifen. Hierdurch wird die Lagerbeständigkeit erheblich erhöht. Dies trifft insbesondere auch auf 1-Komponenten-Beschichtungsmassen zu. Bei diesen liegen die Komponenten der ersten Zusammensetzung A) und der zweiten Zusammensetzung B) bereits vermengt vor.

Die mit der ersten Zusammensetzung A) oder mit der dritten Zusammensetzung C) verwendeten Polydialkylsiloxane sowie insbesondere auch die erste Zusammensetzung A) oder die dritte Zusammensetzung C) als solche sind vorzugsweise im Wesentlichen frei von Weichmachern.

In den erfindungsgemäßen Beschichtungsmassen können in einigen Ausführungsformen auch Lösungsmittel zugegen sein. Dies betrifft entweder die erste Zusammensetzung A) oder die zweite Zusammensetzung B) oder die dritte Zusammensetzung C). Häufig reicht es aus, nur für die zweite Zusammensetzung B) ein, insbesondere wasserfreies, Lösungsmittel zu verwenden.

Für einige Anwendungen hat es sich als zweckmäßig erwiesen, die Gesamtmenge an Lösemittel im Bereich von 0,5 bis 8,0 Gewichtsprozent und bevorzugt im Bereich von 1,0 bis 5,0 Gewichtsprozent, bezogen auf das Gesamtgewicht der erfindungsgemäßen Beschichtungsmasse, zu wählen.

Grundsätzlich können für die erste Zusammensetzung A) oder die dritte Zusammensetzung C) der erfindungsgemäßen Beschichtungsmassen verschiedenste Füllstoffe (Komponente a2)) verwendet werden. Unter diesen kommen bevorzugt Füllstoffe ausgewählt aus der Gruppe bestehend aus Mikrokugeln, bevorzugt Mikrohohlkugeln und/oder Mikrovollkugeln, besonders bevorzugt Mikrovollkugeln, beispielsweise aus Glas, calcitischen Füllstoffen, silikatischen Füllstoffen, insbesondere Schichtsilikaten, und beliebigen Mischungen hiervon zum Einsatz. Ganz besonders bevorzugt wird auf Mikrokugeln, z.B. Vollkugeln aus Glas, und/oder auf Schichtsilikate zurückgegriffen. Besonders geeignete Materialien für Mikrovollkugeln umfassen Alkali-Alumosilikatkeramik-Materialien. Daneben, oder zusätzlich, eignen sich auch solche Füllstoffe für die Lösung der der Erfindung zugrunde liegende Aufgabe, die eine plättchenförmige oder kantige Morphologie aufweisen.

Unter geeigneten Mikrokugeln wird bevorzugt zurückgegriffen auf solche mit einer durchschnittlichen Teilchengröße, insbesondere absoluten Teilchengröße, kleiner 1000 µm, bevorzugt kleiner oder gleich 100 µm, besonders bevorzugt kleiner oder gleich 75 µm, ganz besonders bevorzugt kleiner oder gleich 50 µm und insbesondere kleiner oder gleich 40 µm. Dabei sind solche Mikrokugeln, insbesondere Mikrovollkugeln, ganz besonders geeignet, deren absolute Teilchengröße kleiner oder gleich 100 µm, bevorzugt kleiner oder gleich 75 µm und ganz besonders bevorzugt kleiner oder gleich 50 µm ist. Besonders zweckmäßig sind auch solche Mikrokugeln, insbesondere Mikrovollkugeln, die, alternativ oder zusätzlich, über einen D90-Wert im Bereich von 10 bis 50 µm und bevorzugt im Bereich von 20 bis 40 µm verfügen.

Geeignete erfindungsgemäße erste Zusammensetzungen A) oder dritte Zusammensetzungen C) können ferner mindestens ein Pigment enthalten. Um zu transparenten Beschichtungen zu gelangen, können die erfindungsgemäßen Beschichtungsmassen auch völlig frei von Pigmenten sein.

Geeignete Pigmente umfassen Weißpigmente wie Titandioxid, insbesondere Rutil, anorganische Bunt- und Schwarzpigmente sowie Effektpigmente und organische Pigmente wie Bunt- und Schwarzpigmente. Als geeignete anorganische Weißpigmente kommen alternativ oder zusätzlich zu dem vorangehend geschilderten Titandioxid zum Beispiel Zinksulfid,

Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat.

Besonders geeignete Pigmente umfassen zum Beispiel Titandioxid, Zinksulfid, Baryt, Ruß, Eisenoxid, Chromoxid, Kobaltblau, Spinellpigment, Nickeltitanat, Chromtitanat und deren beliebige Mischungen.

Als geeignete organische Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 194, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Für die erste Zusammensetzung A) oder die dritte Zusammensetzung C) verwendet man als Vernetzerkomponente a3) bevorzugt solche ausgewählt aus der Gruppe bestehend aus a3-a) Alkoxysilanen, insbesondere Tetramethoxysilan, Tetraethoxysilane, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan und/oder 1,2-Bis(triethoxysilyl)ethan, wobei Tetramethoxysilan, Tetraethoxysilane, Tetrapropoxysilan, Tetrabutoxysilan, Methyltrimethoxysilan, Methyltriethoxysilan, Phenyltrimethoxysilan, Phenyltriethoxysilan, 1,2-Bis(trimethoxysilyl)ethan und/oder 1,2-Bis(triethoxysilyl)ethan besonders bevorzugt sind; a3-b) aminofunktionellen Siloxanen, insbesondere 3-Aminopropyltrimethoxysilan, 3-(2-Aminoethyl)aminopropyltrimethoxysilan, 3-Aminopropyltriethoxysilan, 3-(2-Aminoethyl)aminopropyltriethoxysilan, 3-Aminopropyldimethoxymethyl-silan, 3-(2-Aminoethyl)aminopropyldiethoxymethylsilan, 3-Aminopropyldiethoxymethylsilan und/oder 3-(2-Aminoethyl)aminopropyl-diethoxymethylsilan, besonders bevorzugt 3-Aminopropyltrimethoxysilan und/oder 3-Aminopropyltriethoxysilan; a3-c) Silsesquioxanen, enthaltend an Siliziumatome gebundene Hydroxylgruppen und/oder an Siliziumatome gebundene Alkoxygruppen, insbesondere ethoxy-terminiertes 3-Aminopropyl(methyl)silsesquioxan (CAS-Nummer 128446-60-6); und deren beliebige Mischungen. Die Mischungen an Vernetzerkomponente a3) können jeweils eine oder mehrere Verbindungen der Untergruppen a3-a) und a3-b) oder a3-a) und a3-c) oder a3-b) und a3-c) oder a3-a), a3-b) und a3-c) darstellen oder umfassen, wobei Mischungen gebildet aus Verbindungen der Untergruppen a3-b) und a3-c) besonders geeignet sind.

Die Vernetzerkomponente a3) liegt in der ersten Zusammensetzung A) oder der dritten Zusammensetzung C) in geeigneten Ausführungsformen, insbesondere solchen, die nicht für die Beschichtung von PVC-Substratoberflächen herangezogen werden, regelmäßig in Mengen im Bereich von 1 bis 20 Gew.-%, bevorzugt 2 bis 15 Gew.-% und besonders bevorzugt 4 bis 10 Gew.-%, jeweils bezogen auf das Gesamtgewicht der Beschichtungsmasse, vor. In geeigneten Ausführungsformen, die vorzugsweise für die Beschichtung von PVC-Substratoberflächen verwendet werden, liegt die Vernetzerkomponente a3) in der ersten Zusammensetzung A) oder der dritten Zusammensetzung C) in Mengen im Bereich von 2 bis 25 Gew.-%, bevorzugt 4 bis 20 Gew.-% und besonders bevorzugt 6 bis 15 Gew.-%, jeweils bezogen auf das Gesamtgewicht der Beschichtungsmasse, vor.

Als besonders geeignete Katalysatoren für die zweite Zusammensetzung B) oder die dritte Zusammensetzung C) werden bevorzugt Organozinn-basierte Katalysatoren wie Dialkylzinn-Verbindungen, insbesondere Dibutylzinn-Verbindungen, oder Platin-basierte Katalysatoren eingesetzt. Unter den Organozinn-basierten Katalysatoren hat sich Bis(acetyloxy)dibutylstannan als besonders geeignet erwiesen.

Ferner kann neben den Zinn-, Platin- und Bismuth-basierten Katalysatoren auch auf Titanbasierte Katalysatoren zurückgegriffen werden. Hierbei handelt es sich insbesondere um Titanchelat-Katalysator. Unter diesen sind solche bevorzugt, die ausgewählt sind aus der Gruppe bestehend aus Tetra(isopropoxy)titan, Tetrabutoxytitan, Diisopropoxybis-(ethylacetoacetat)titan, Diisopropoxybis(methylacetoacetat)titan, Diisopropoxybis(acetylaceton)titan, Dibutoxybis(ethylacetoacetat)titan, Dimethoxybis(ethylacetoacetat)titan und deren beliebigen Mischungen, wobei Bis(ethyl acetoacetates)diisopropoxytitan besonders bevorzugt ist.

Die erste Zusammensetzung A) oder die dritte Zusammensetzung C) der erfindungsgemäßen Beschichtungsmasse enthalten bevorzugt
25 bis 65 Gew.-%, bevorzugt 35 bis 60 Gew.-% und besonders bevorzugt 40 bis 55 Gew.-%, an Komponente a1), bezogen auf das Gesamtgewicht der Beschichtungsmasse,
5 bis 55 Gew.-%, bevorzugt 10 bis 40 Gew.-% und besonders bevorzugt 15 bis 30 Gew.-%, an Komponente a2), bezogen auf das Gesamtgewicht der Beschichtungsmasse,
1 bis 25 Gew.-%, bevorzugt 2 bis 20 Gew.-% und besonders bevorzugt 4 bis 15 Gew.-%, an Komponente a3), bezogen auf das Gesamtgewicht der Beschichtungsmasse,
0 bis 15 Gew.-%, bevorzugt 1 bis 12 Gew.-% und besonders bevorzugt 2 bis 8 Gew.-%, an Komponente a5), bezogen auf das Gesamtgewicht der Beschichtungsmasse,
0 bis 45 Gew.-%, bevorzugt 5 bis 35 Gew.-% und besonders bevorzugt 10 bis 25 Gew.-%, an Komponente a6), bezogen auf das Gesamtgewicht der Beschichtungsmasse, und/oder, insbesondere und,
0 bis 10 Gew.-%, bevorzugt 0,5 bis 8,0 Gew.-% und besonders bevorzugt 1,0 bis 5,0 Gew.-%, an Komponente a7), bezogen auf das Gesamtgewicht der Beschichtungsmasse,
wobei die die Beschichtungsmasse bildenden Komponenten jeweils stets 100,0 Gew.-% ergeben.

In einer bevorzugten Ausführungsform der ersten Ausführungsvariante ist die erfindungsgemäße Beschichtungsmasse gebildet aus oder umfasst oder besteht aus einer ersten Zusammensetzung A), enthaltend oder bestehend aus
a1) Polydimethylsiloxan enthaltend Dimethoxy-Endgruppen,
a2) Füllstoff, bevorzugt Mikrokugeln, besonders bevorzugt Mikrovollkugeln und ganz besonders bevorzugt aus Alkali-Alumosilikatkeramikmaterialien,
a3) mindestens einem Vernetzer und
a5) synthetischer hydrophober Kieselsäure, bevorzugt amorpher und/oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure, und
a6) Orthokieselsäureester, bevorzugt Tetraalkoxysilanen, besonders bevorzugt Tetraethoxysilan, sowie
a7) gegebenenfalls mindestens einem Haftvermittler,
einer zweiten Zusammensetzung B), enthaltend oder bestehend aus
b1) mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) mindestens einem Offenzeitverlängerer, insbesondere Isobutylmethylketon.

In einer bevorzugten Ausführungsform der zweiten Ausführungsvariante ist die erfindungsgemäße Beschichtungsmasse gebildet aus oder umfasst oder besteht aus einer dritten Zusammensetzung C), enthaltend oder bestehend aus
a1) Polydimethylsiloxan enthaltend Dimethoxy-Endgruppen,
a2) Füllstoff, bevorzugt Mikrokugeln, besonders bevorzugt Mikrovollkugeln und ganz besonders bevorzugt aus Alkali-Alumosilikatkeramikmaterialien,
a3) mindestens einem Vernetzer, und
a5) synthetischer hydrophober Kieselsäure, bevorzugt amorpher und/oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure,
a6) Orthokieselsäureester, bevorzugt Tetraalkoxysilanen, besonders bevorzugt Tetraethoxysilan,
a7) gegebenenfalls mindestens einem Haftvermittler,
b1) mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) mindestens einem Offenzeitverlängerer, insbesondere Isobutylmethylketon.

In einer besonders bevorzugten Ausführungsform der ersten Ausführungsvariante ist die erfindungsgemäße Beschichtungsmasse gebildet aus oder umfasst oder besteht aus einer ersten Zusammensetzung A), enthaltend oder bestehend aus
a1) 30 bis 60 Gew.-%, bevorzugt 40 bis 50 Gew.-%, Polydimethylsiloxan enthaltend Dimethoxy-Endgruppen, bezogen auf das Gesamtgewicht der Beschichtungsmasse,
a2) 10 bis 30 Gew.-%, bevorzugt 15 bis 25 Gew.-%, Füllstoff, bevorzugt Mikrokugeln, besonders bevorzugt Mikrovollkugeln und ganz besonders bevorzugt aus Alkali-Alumosilikatkeramikmaterialien, bezogen auf das Gesamtgewicht der Beschichtungsmasse,
a3) 3 bis 15 Gew.-%, bevorzugt 6 bis 10 Gew.-%, an mindestens einem Vernetzer, bezogen auf das Gesamtgewicht der Beschichtungsmasse,
a5) 2 bis 10 Gew.-%, bevorzugt 3 bis 8 Gew.-%, an synthetischer hydrophober Kieselsäure, bevorzugt amorpher und/oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure, bezogen auf das Gesamtgewicht der Beschichtungsmasse,
a6) 10 bis 30 Gew.-%, bevorzugt 15 bis 25 Gew.-%, an Orthokieselsäureester, bevorzugt Tetraalkoxysilanen, besonders bevorzugt Tetraethoxysilan, bezogen auf das Gesamtgewicht der Beschichtungsmasse, und
a7) 0 bis 7 Gew.-%, bevorzugt 2 bis 5 Gew.-%, an mindestens einem Haftvermittler, bezogen auf das Gesamtgewicht der Beschichtungsmasse,
einer zweiten Zusammensetzung B), enthaltend oder bestehend aus
b1) 0,05 bis 0,5 Gew.-%, bevorzugt 0,15 bis 0,4 Gew.-%, an mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) 0,5 bis 3 Gew.-%, bevorzugt 1,0 bis 2,0 Gew.-%, an mindestens einem Offenzeitverlängerer, insbesondere Isobutylmethylketon,
wobei die die Beschichtungsmasse bildenden Komponenten stets 100,0 Gew.-% ergeben.

In einer besonders bevorzugten Ausführungsform der zweiten Ausführungsvariante ist die erfindungsgemäße Beschichtungsmasse gebildet aus oder umfasst oder besteht aus einer dritten Zusammensetzung C), enthaltend oder bestehend aus
a1) 30 bis 60 Gew.-%, bevorzugt 40 bis 50 Gew.-%, Polydimethylsiloxan enthaltend Dimethoxy-Endgruppen, bezogen auf das Gesamtgewicht der Beschichtungsmasse,
a2) 10 bis 30 Gew.-%, bevorzugt 15 bis 25 Gew.-%, Füllstoff, bevorzugt Mikrokugeln, besonders bevorzugt Mikrovollkugeln und ganz besonders bevorzugt aus Alkali-Alumosilikatkeramikmaterialien, bezogen auf das Gesamtgewicht der Beschichtungsmasse,
a3) 3 bis 15 Gew.-%, bevorzugt 6 bis 10 Gew.-%, an mindestens einem Vernetzer, bezogen auf das Gesamtgewicht der Beschichtungsmasse,
a5) 2 bis 10 Gew.-%, bevorzugt 3 bis 8 Gew.-%, an synthetischer hydrophober Kieselsäure, bevorzugt amorpher und/oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure, bezogen auf das Gesamtgewicht der Beschichtungsmasse,
a6) 10 bis 30 Gew.-%, bevorzugt 15 bis 25 Gew.-%, an Orthokieselsäureester, bevorzugt Tetraalkoxysilanen, besonders bevorzugt Tetraethoxysilan, bezogen auf das Gesamtgewicht der Beschichtungsmasse,
a7) 0 bis 7 Gew.-%, bevorzugt 2 bis 5 Gew.-%, an mindestens einem Haftvermittler, bezogen auf das Gesamtgewicht der Beschichtungsmasse,
b1) 0,05 bis 0,5 Gew.-%, bevorzugt 0,15 bis 0,4 Gew.-%, an mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) 0,5 bis 3 Gew.-%, bevorzugt 1,0 bis 2,0 Gew.-%, an mindestens einem Offenzeitverlängerer, insbesondere Isobutylmethylketon,
wobei die die Beschichtungsmasse bildenden Komponenten stets 100,0 Gew.-% ergeben.

Die der Erfindung zugrunde liegende Aufgabe wird auch gelöst durch einen Kit-of-parts für eine Beschichtungsmasse, enthaltend als erste Komponente die erste Zusammensetzung A) der erfindungsgemäßen Beschichtungsmasse und als zweite Komponente die zweite Zusammensetzung B) der erfindungsgemäßen Beschichtungsmasse. Diese beiden Komponenten liegen bevorzugt in separaten Gebinden vor und werden kurz vor dem Gebrauch aus diesem Gebinden entnommen und miteinander vermengt.

Die separate Herstellung und Lagerung der Zusammensetzung A) bringt den Vorteil mit sich, dass sie auch am Point of Sale oder am Point of Use hergestellt und abgefüllt werden kann, d.h. relativ zeitnah vor der tatsächlichen Applikation.

Die der Erfindung zugrunde liegende Aufgabe wird des Weiteren gelöst durch eine Beschichtung, erhalten oder erhältlich mit der erfindungsgemäßen Beschichtungsmasse oder mit dem erfindungsgemäßen Kit-of-parts.

Mit den erfindungsgemäßen Beschichtungsmassen werden regelmäßig erfindungsgemäße Beschichtungen erhalten, die diffusionsoffen und/oder hydrophob, bevorzugt diffusionsoffen und besonders bevorzugt diffusionsoffen und hydrophob sind. Eine Beschichtung ist wird im Allgemeinen als hydrophob angesehen, wenn der an einem auf dieser Beschichtung aufliegenden Wassertropfen bestimmte Kontaktwinkel (auch Randwinkel oder Benetzungswinkel genannt) 90° oder darüber liegt.

Mit den erfindungsgemäßen Beschichtungen gelingt vorzugsweise auch ein Zugang zu solchen Beschichtungen mit einer Shore-Härte A im Bereich von 45 bis 75 und insbesondere im Bereich von 60 bis 70, jeweils ermittelt gemäß DIN ISO 7619-1 (Februar 2012).

Die erfindungsgemäßen Beschichtungen zeichneten sich in bevorzugten Ausführungsformen zudem aus durch eine Reißdehnung, ermittelt gemäß DIN 53504 (Oktober 2009) von mindestens 50 %, bevorzugt mindestens 60 %, besonders bevorzugt mindestens 80 % und ganz besonders bevorzugt mindestens 90 %. Die Prüfkörper wurden hierfür gemäß DIN EN ISO 527-2 (2012-06) - Vielzweckprüfkörper Typ 1A - hergestellt, wobei die Dicke der getesteten Beschichtungen bei 500 µm lag, die Zuggeschwindigkeit bei 1 cm/min.

Die erfindungsgemäßen Beschichtungen sind über einen großen Temperaturbereich dauerelastisch, vorzugsweise im Bereich von -40°C bis +70°C. Ein besonderer Vorteil ist auch, dass die erfindungsgemäßen Beschichtungsmassen auch noch bei tiefen Temperaturen, beispielsweise im Bereich von -5°C bis +10°C, insbesondere auch bei +5°, einwandfrei verarbeitet werden können und auch bei diesen Temperaturen hochwertige Beschichtungen liefern. In bevorzugten Ausführungsformen der erfindungsgemäßen Beschichtungsmassen ist die Differenz zwischen der bei 23 °C und der bei 5 °C gemessenen Viskosität kleiner 1.500 mPa·s, bevorzugt kleiner 1.000 mPa·s und ganz besonders bevorzugt kleiner 750 mPa·s. Hierbei kann die Viskosität der erfindungsgemäßen Beschichtungsmassen bei 25°C bestimmt werden unter Verwendung der DIN EN ISO 3219 (1994-10) mithilfe eines Kegel/Platte-Viskosimeters mit einem Kegeldurchmesser von 25 mm (z.B. Modell CP25-2 der Anton Paar GmbH) und einem Spaltmaß von 0,105 mm. Geeigneter Weise erstreckt sich dabei die Scherratenrampe über einen Bereich von 0,1 bis 10 1/s log, die Frequenz fliegt bei 10 Hz und/oder, insbesondere und, die Amplitude Gamma bei 1 %.

Ferner wird die der Erfindung zugrunde liegende Aufgabe gelöst durch ein beschichtetes Substrat, erhalten durch Behandeln eines Substrats mit der erfindungsgemäßen Beschichtungsmasse. Für solche beschichteten Substrate wird insbesondere auf Substrate zurückgegriffen, die ausgewählt sind aus der Gruppe bestehend aus Holz-, Glas-, Keramik-, Metall-, Kunststoff-, insbesondere Polyolefin- und/oder PVC-Substrate, Beton-, Altanstrich-, Gummi-, insbesondere EPDM-, SBR- und/oder Kautschuk-Substrate, Schaumstoff- und WPC-Substraten.

Die erfindungsgemäßen Beschichtungsmassen können demgemäß verwendet werden für die Beschichtung eines Substrats ausgewählt aus der Gruppe bestehend aus Holz-, Glas-, Keramik-, Metall-, Kunststoff-, insbesondere Polyolefin- und/oder PVC-Substrate, Beton-, Altanstrich-, Gummi-, insbesondere EPDM-, SBR- und/oder Kautschuk-Substrate, Schaumstoff- und WPC-Substraten, insbesondere von Holzsubstraten.

Dabei können die erfindungsgemäßen Beschichtungsmassen mittels Malerwalze, Bürste, Rakel, einem Spritzsystem oder Pinsel auf einem Substrat aufgetragen werden.

Mit dem erfindungsgemäßen Beschichtungssystem ist möglich, dass hierfür die AgBB Richtlinie für Verlege- und Dichtmassen (AgBB- Bewertungsschema für VOC aus Bauprodukten; Stand 2015) die maßgebliche Norm darstellt, nicht jedoch die Decopaint Richtlinie "VOC Decopaint 2004/ 42/ EC".

Der vorliegenden Erfindung liegt die überraschende Erkenntnis zugrunde, dass mit den erfindungsgemäßen Beschichtungsmasse Beschichtungen erhalten werden, die robust gegen Witterungseinflüsse sind und allenfalls sehr langsam spröde werden. Des Weiteren geht mit den erfindungsgemäßen Beschichtungsmassen der Vorteil einher, dass diese, selbst wenn auf relativ neuen Werkstoffen wie Wood Plastic Composites (WPC) appliziert, einen wirksamen und langlebigen Witterungsschutz, insbesondere auch UV-Schutz, liefern. Dies trifft ebenfalls auf geschäumte Substrate zu. Des Weiteren wurde überraschend gefunden, dass sich mit den erfindungsgemäßen Beschichtungsmassen Beschichtungen erhalten lassen, die diffusionsoffen und insbesondere auch hydrophob sind. Dies ermöglicht einen möglichst natürlichen Feuchtehaushalt der beschichteten Substrate. Insbesondere kann mit den erfindungsgemäßen Beschichtungen Feuchtigkeit aus Substraten heraus diffundieren, was die Gefahr von Schimmelbildung mindern hilft. Mit den erfindungsgemäßen Beschichtungsmassen bzw. den daraus erhältlichen Beschichtungen geht ferner der Vorteil einher, dass sie sehr gut sowohl auf mineralischen wie auch auf nicht mineralischen Oberflächen haften. Überdies sind sie regelmäßig schwer entflammbar und weisen eine gute Säure- wie auch Laugenbeständigkeit auf. Als vorteilhaft hat sich weiterhin herausgestellt, dass die erfindungsgemäßen Beschichtungen über eine ausgeprägte Dauerelastizität über einen großen Temperaturbereich, vorzugsweise im Bereich von -40°C bis +70°C, verfügen.

Von ganz besonderem Vorteil ist auch, dass sich die erfindungsgemäßen Beschichtungsmasse auch noch ohne weiteres bei Temperaturen um 0 °C einwandfrei verarbeiten lassen und auch bei diesen Temperaturen hochwertige Beschichtungen liefern.

Das Einsatzspektrum der erfindungsgemäßen Beschichtungsmassen wird nochmals dadurch erhöht, dass sie sich als solche, also in Form der dritten Zusammensetzung C), oder aber die Zusammensetzung A) dieser Beschichtungsmassen für die Herstellung bzw. Einfärbung und Abfüllung am Point of Sale eignen.

Die in der voranstehenden Beschreibung und den Ansprüchen offenbarten Merkmale der Erfindung können sowohl einzeln als auch in jeder beliebigen Kombination für die Verwirklichung der Erfindung vorteilhaft sein.

## Patentansprüche

1. Beschichtungsmasse, gebildet aus oder umfassend
eine erste Zusammensetzung A), enthaltend
a1) mindestens ein, insbesondere raumtemperaturvernetzendes (RTV-), Polydialkylsiloxan, vorzugsweise Polydimethylsiloxan,
a2) Füllstoffe, bevorzugt plättchenförmige Füllstoffe und/oder Mikrokugeln, besonders bevorzugt Mikrokugeln, und/oder Pigmente und
a3) mindestens einen Vernetzer, sowie
a4) gegebenenfalls ein Verdünnungsmittel, und
eine zweite Zusammensetzung B), enthaltend
b1) mindestens einen Katalysator, insbesondere ein Organozinn-basierter Katalysator oder ein Platin-basierter Katalysator oder ein Bismuth-basierter Katalysator oder ein Titan-basierter Katalysator oder ein Zirkonium-basierter Katalysator, und
b2) gegebenenfalls ein Verdünnungsmittel
oder
eine dritte Zusammensetzung C), gebildet aus oder umfassend
a1) mindestens ein, insbesondere raumtemperaturvernetzendes (RTV-), Polydialkylsiloxan, vorzugsweise Polydimethylsiloxan,
a2) Füllstoffe, bevorzugt plättchenförmige Füllstoffe und/oder Mikrokugeln, besonders bevorzugt Mikrokugeln, und/oder Pigmente und
a3) mindestens einen Vernetzer, und
b1) mindestens einen Katalysator, insbesondere ein Organozinn-basierter Katalysator oder ein Platin-basierter Katalysator oder ein Bismuth-basierter Katalysator oder ein Titan-basierter Katalysator oder ein Zirkonium-basierter Katalysator, und
b2) gegebenenfalls ein Verdünnungsmittel.

2. Beschichtungsmasse nach Anspruch 1, **dadurch gekennzeichnet, dass** die erste Zusammensetzung A) oder die dritte Zusammensetzung C) ferner
a5) Kieselsäuren, insbesondere pyrogene Kieselsäure, und/ oder
a6) Orthokieselsäureester, bevorzugt Tetraalkoxysilane, besonders bevorzugt Tetraethoxysilan, und/ oder
a7) mindestens einen Haftvermittler
umfassen
und/oder dass
die zweite Zusammensetzung B) oder die dritte Zusammensetzung C) ferner
b3) mindestens einen Offenzeitverlängerer, insbesondere Isobutylmethylketon, umfassen.

3. Beschichtungsmasse nach Anspruch 1 oder 2, **dadurch gekennzeichnet, dass** das Polydialkylsiloxan Dialkoxyendgruppen, insbesondere Dimethoxyendgruppen, aufweist.

4. Beschichtungsmasse nach einem der vorangehenden Ansprüche, **dadurch gekennzeichnet, dass**
das mindestens ein Polydialkylsiloxan eine Viskosität im Bereich von 0,25 bis 15 Pa.s, bevorzugt im Bereich von 0,5 bis 12 Pa.s und besonders bevorzugt im Bereich von 0,75 bis 10 Pa.s, jeweils ermittelt gemäß DIN 53019-1:2008-09 bei 25°C, aufweist.

5. Beschichtungsmasse nach einem der vorangehenden Ansprüche, **dadurch gekennzeichnet, dass**
der Füllstoff ausgewählt ist aus der Gruppe bestehend aus Mikrokugeln, insbesondere Vollkugeln, bevorzugt Glaskugeln, und/oder Mikrohohlkugeln, calcitischen Füllstoffen, silikatischen Füllstoffen, insbesondere Schichtsilikaten, und beliebigen Mischungen hiervon, insbesondere Mikrokugeln.

6. Beschichtungsmasse nach einem der vorangehenden Ansprüche, **dadurch gekennzeichnet, dass**
die Differenz zwischen der bei 23 °C und der bei 5 °C gemessenen Viskosität der Beschichtungsmasse kleiner 1.500 mPa·s, bevorzugt kleiner 1.000 mPa·s und ganz besonders bevorzugt kleiner 750 mPa·s, jeweils ermittelt bei 25°C unter Verwendung der DIN EN ISO 3219 (1994-10) mithilfe eines Kegel/Platte-Viskosimeters mit einem Kegeldurchmesser von 25 mm und einem Spaltmaß von 0,105 mm, ist.

7. Beschichtungsmasse nach einem der vorangehenden Ansprüche, **dadurch gekennzeichnet, dass**
das mindestens eine Polydialkylsiloxan, insbesondere das raumtemperaturvernetzende (RTV-) Polydialkylsiloxan, vorzugsweise Polydimethylsiloxan, ein kondensations- oder additionsvernetzendes, insbesondere ein kondensationsvernetzendes, Polydialkylsiloxan darstellt.

8. Beschichtungsmasse nach einem der vorangehenden Ansprüche, **dadurch gekennzeichnet, dass**
der Vernetzer a3) ausgewählt ist aus der Gruppe bestehend aus
a3-a) Alkoxysilanen, insbesondere Tetramethoxysilan, Tetraethoxysilane, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan und/oder 1,2-Bis(triethoxysilyl)ethan;
a3-b) aminofunktionellen Siloxanen, insbesondere 3-Aminopropyltrimethoxysilan, 3-(2-Aminoethyl)aminopropyl-trimethoxysilan, 3-Aminopropyltriethoxysilan, 3-(2-Aminoethyl)aminopropyltriethoxysilan, 3-Aminopropyldimethoxymethylsilan, 3-(2-Aminoethyl)aminopropyldiethoxymethylsilan, 3-Aminopropyldiethoxymethylsilan und/ oder 3-(2-Aminoethyl)aminopropyldiethoxymethylsilan, besonders bevorzugt 3-Aminopropyltrimethoxysilan und/oder 3-Aminopropyltriethoxysilan;
a3-c) Silsesquioxanen, enthaltend an Siliziumatome gebundene Hydroxylgruppen und/oder an Siliziumatome gebundene Alkoxygruppen, insbesondere ethoxy-terminierte 3-Aminopropyl(methyl)silsesquioxane; und
d) deren beliebige Mischungen.

9. Beschichtungsmasse nach einem der Ansprüche 2 bis 8, **dadurch gekennzeichnet, dass**
der Haftvermittler ausgewählt ist aus der Gruppe bestehend aus Silanen mit amino-, acryl-, epoxy-, cyanurato-, carbamato- oder ureidofunktionellen Gruppen; Organopolysiloxanen mit Silanen mit amino-, acryl-, epoxy-, cyanurato-, carbamato- oder ureidofunktionellen Gruppen funktionellen Gruppen; und deren beliebigen Mischungen.

10. Beschichtungsmasse nach einem der vorangehenden Ansprüche, **dadurch gekennzeichnet, dass**
die erste Zusammensetzung A) oder die dritte Zusammensetzung C) enthält
25 bis 65 Gew.-%, bevorzugt 35 bis 60 Gew.-% und besonders bevorzugt 40 bis 55 Gew.-%, an Komponente a1), bezogen auf das Gesamtgewicht der Beschichtungsmasse,
5 bis 55 Gew.-%, bevorzugt 10 bis 40 Gew.-% und besonders bevorzugt 15 bis 30 Gew.-%, an Komponente a2), bezogen auf das Gesamtgewicht der Beschichtungsmasse,
1 bis 25 Gew.-%, bevorzugt 2 bis 20 Gew.-% und besonders bevorzugt 4 bis 15 Gew.-%, an Komponente a3), bezogen auf das Gesamtgewicht der Beschichtungsmasse, 0 bis 15 Gew.-%, bevorzugt 1 bis 12 Gew.-% und besonders bevorzugt 2 bis 8 Gew.-%, an Komponente a5), bezogen auf das Gesamtgewicht der Beschichtungsmasse, 0 bis 45 Gew.-%, bevorzugt 5 bis 35 Gew.-% und besonders bevorzugt 10 bis 25 Gew.-%, an Komponente a6), bezogen auf das Gesamtgewicht der Beschichtungsmasse,
und/oder, insbesondere und,
0 bis 10 Gew.-%, bevorzugt 0,5 bis 8,0 Gew.-% und besonders bevorzugt 1,0 bis 5,0 Gew.-%, an Komponente a7), bezogen auf das Gesamtgewicht der Beschichtungsmasse,
wobei die die Beschichtungsmasse bildenden Komponenten jeweils stets 100,0 Gew.-% ergeben.

11. Beschichtungsmasse nach einem der Ansprüche 2 bis 9, **dadurch gekennzeichnet, dass**
diese gebildet ist aus oder umfasst oder besteht aus
einer ersten Zusammensetzung A), enthaltend oder bestehend aus
a1) Polydimethylsiloxan enthaltend Dimethoxy-Endgruppen,
a2) Füllstoff, bevorzugt Mikrokugeln, besonders bevorzugt Mikrovollkugeln und ganz besonders bevorzugt Mikrovollkugeln aus Alkali-Alumosilikatkeramik-Materialien,
a3) mindestens einem Vernetzer,
a5) synthetischer hydrophober Kieselsäure, bevorzugt amorpher und/ oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure, und
a6) Orthokieselsäureester, bevorzugt Tetraalkoxysilanen, besonders bevorzugt Tetraethoxysilan, sowie
a7) gegebenenfalls mindestens einem Haftvermittler, und
einer zweiten Zusammensetzung B), enthaltend oder bestehend aus
b1) mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) mindestens einem Offenzeitverlängerer, insbesondere Isobutylmethylketon.

12. Beschichtungsmasse nach einem der Ansprüche 2 bis 9, **dadurch gekennzeichnet, dass**
diese gebildet ist aus oder umfasst oder besteht aus einer dritten Zusammensetzung C), enthaltend oder bestehend aus
a1) Polydimethylsiloxan enthaltend Dimethoxy-Endgruppen,
a2) Füllstoff, bevorzugt Mikrokugeln, besonders bevorzugt Mikrovollkugeln und ganz besonders bevorzugt Mikrovollkugeln aus Alkali-Alumosilikatkeramik-Materialien,
a3) mindestens einem Vernetzer,
a5) synthetischer hydrophober Kieselsäure, bevorzugt amorpher und/ oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure,
a6) Orthokieselsäureester, bevorzugt Tetraalkoxysilanen, besonders bevorzugt Tetraethoxysilan,
a7) gegebenenfalls mindestens einem Haftvermittler,
b1) mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) mindestens einem Offenzeitverlängerer, insbesondere Isobutylmethylketon.

13. Beschichtungsmasse nach einem der Ansprüche 2 bis 12, **dadurch gekennzeichnet, dass**
diese gebildet ist aus oder umfasst oder besteht aus
a1) 30 bis 60 Gew.-%, bevorzugt 40 bis 50 Gew.-%, Polydimethylsiloxan enthaltend Dimethoxy-Endgruppen, bezogen auf das Gesamtgewicht der Beschichtungsmasse,
a2) 10 bis 30 Gew.-%, bevorzugt 15 bis 25 Gew.-%, Füllstoff, bevorzugt Mikrokugeln, besonders bevorzugt Mikrovollkugeln und ganz besonders bevorzugt Mikrovollkugeln aus Alkali-Alumosilikatkeramik-Materialien, bezogen auf das Gesamtgewicht der Beschichtungsmasse,
a3) 3 bis 15 Gew.-%, bevorzugt 6 bis 10 Gew.-%, an mindestens einem Vernetzer, bezogen auf das Gesamtgewicht der Beschichtungsmasse,
a5) 2 bis 10 Gew.-%, bevorzugt 3 bis 8 Gew.-%, an synthetischer hydrophober Kieselsäure, bevorzugt amorpher und/ oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure, bezogen auf das Gesamtgewicht der Beschichtungsmasse,
a6) 10 bis 30 Gew.-%, bevorzugt 15 bis 25 Gew.-%, an Orthokieselsäureester, bevorzugt Tetraalkoxysilanen, besonders bevorzugt Tetraethoxysilan, bezogen auf das Gesamtgewicht der Beschichtungsmasse, und
a7) 0 bis 7 Gew.-%, bevorzugt 2 bis 5 Gew.-%, an mindestens einem Haftvermittler, bezogen auf das Gesamtgewicht der Beschichtungsmasse, und
einer zweiten Zusammensetzung B), enthaltend oder bestehend aus
b1) 0,05 bis 0,5 Gew.-%, bevorzugt 0,15 bis 0,4 Gew.-%, an mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) 0,5 bis 3 Gew.-%, bevorzugt 1,0 bis 2,0 Gew.-%, an mindestens einem Offenzeitverlängerer, insbesondere Isobutylmethylketon,
wobei die die Beschichtungsmasse bildenden Komponenten stets 100,0 Gew.-% ergeben.

14. Beschichtungsmasse nach einem der Ansprüche 2 bis 12, **dadurch gekennzeichnet, dass**
diese gebildet ist aus oder umfasst oder besteht aus
a1) 30 bis 60 Gew.-%, bevorzugt 40 bis 50 Gew.-%, Polydimethylsiloxan enthaltend Dimethoxy-Endgruppen, bezogen auf das Gesamtgewicht der Beschichtungsmasse,
a2) 10 bis 30 Gew.-%, bevorzugt 15 bis 25 Gew.-%, Füllstoff, bevorzugt Mikrokugeln, besonders bevorzugt Mikrovollkugeln und ganz besonders bevorzugt Mikrovollkugeln aus Alkali-Alumosilikatkeramik-Materialien, bezogen auf das Gesamtgewicht der Beschichtungsmasse,
a3) 3 bis 15 Gew.-%, bevorzugt 6 bis 10 Gew.-%, an mindestens einem Vernetzer, bezogen auf das Gesamtgewicht der Beschichtungsmasse,
a5) 2 bis 10 Gew.-%, bevorzugt 3 bis 8 Gew.-%, an synthetischer hydrophober Kieselsäure, bevorzugt amorpher und/ oder flammenhydrolytisch hergestellter Kieselsäure, besonders bevorzugt mit Trialkylsiloxy-Gruppen, insbesondere Trimethylsiloxy-Gruppen, oberflächenmodifizierter Kieselsäure, bezogen auf das Gesamtgewicht der Beschichtungsmasse,
a6) 10 bis 30 Gew.-%, bevorzugt 15 bis 25 Gew.-%, an Orthokieselsäureester, bevorzugt Tetraalkoxysilanen, besonders bevorzugt Tetraethoxysilan, bezogen auf das Gesamtgewicht der Beschichtungsmasse,
a7) 0 bis 7 Gew.-%, bevorzugt 2 bis 5 Gew.-%, an mindestens einem Haftvermittler, bezogen auf das Gesamtgewicht der Beschichtungsmasse,
b1) 0,05 bis 0,5 Gew.-%, bevorzugt 0,15 bis 0,4 Gew.-%, an mindestens einem Katalysator, bevorzugt Organozinn-Katalysator, besonders bevorzugt umfassend oder bestehend aus einer Diorganodibutylzinn-Verbindung, ganz besonders bevorzugt Bis(acetyloxy)dibutylzinn, und
b3) 0,5 bis 3 Gew.-%, bevorzugt 1,0 bis 2,0 Gew.-%, an mindestens einem Offenzeitverlängerer, insbesondere Isobutylmethylketon,
wobei die die Beschichtungsmasse bildenden Komponenten stets 100,0 Gew.-% ergeben.

15. Kit-of-parts für eine Beschichtungsmasse, enthaltend
als erste Komponente die Zusammensetzung A) gemäß einem der Ansprüche 1 bis 14 in einem ersten Gebinde und als zweite Komponente die Zusammensetzung B) gemäß einem der Ansprüche 1 bis 14 in einem zweiten Gebinde.

16. Beschichtung, erhalten oder erhältlich mit der Beschichtungsmasse nach einem der Ansprüche 1 bis 14 oder mit dem Kit-of-parts nach Anspruch 15.

17. Beschichtung nach Anspruch 16, **dadurch gekennzeichnet, dass**
diese eine diffusionsoffene und/oder hydrophobe Beschichtung darstellt.

18. Beschichtung nach Anspruch 16 oder 17, **dadurch gekennzeichnet, dass**
diese eine Shore-Härte A im Bereich von 45 bis 75, insbesondere im Bereich von 60 bis 70, aufweist, ermittelt gemäß DIN ISO 7619-1 (Februar 2012), und/oder dass diese eine Reißdehnung, ermittelt gemäß DIN 53504 (Oktober 2009) von mindestens 50 %, bevorzugt mindestens 80 %, aufweist.

19. Beschichtetes Substrat, erhalten durch Behandeln eines Substrats mit der Beschichtungsmasse nach einem der Ansprüche 1 bis 14 oder mit dem Kit-of-parts nach Anspruch 15.

20. Beschichtetes Substrat nach Anspruch 19, **dadurch gekennzeichnet, dass**
das Substrat ausgewählt ist aus der Gruppe bestehend aus Holz-, Glas-, Keramik-, Metall-, Kunststoff-, insbesondere Polyolefin- und/oder PVC-Substrate, Beton-, Altanstrich-, Gummi-, insbesondere EPDM-, SBR- und/oder Kautschuk-Substrate, Schaumstoff- und WPC-Substraten, wobei Kunststoffsubstrate in Form von PVC-Formteilen bevorzugt sind.

21. Verwendung der Beschichtungsmasse nach einem der Ansprüche 1 bis 14 oder des Kit-of-parts nach Anspruch 15 für die Beschichtung eines Substrats ausgewählt aus der Gruppe bestehend aus Holz-, Glas-, Keramik-, Metall-, Kunststoff-, insbesondere Polyolefin- und/oder PVC-Substrate, Beton-, Altanstrich-, Gummi-, insbesondere EPDM-, SBR- und/ oder Kautschuk-Substrate, Schaumstoff- und WPC-Substraten, insbesondere von Holzsubstraten.

22. Verwendung der Beschichtungsmasse nach einem der Ansprüche 1 bis 14 oder des Kit-of-parts nach Anspruch 15 für die Herstellung einer diffusionsoffenen Beschichtung auf einem Substrat.
